# EUROPEAN PATENT APPLICATION

(11) **EP 4 241 952 A1**
(43) Date of publication of application: **13.09.2023**
(21) Application number: 22199111.0
(22) Date of filing: 30.09.2022
(51) Int. Cl.: B28C 7/04, G01G 19/32

(54) **MOBILE CONCRETE PLANT FOR PRODUCING CONCRETE**

(30) Priority: 30.09.2021 NL 2029287
(71) Applicant: VDW Bouwmaterieel B.V., 4061 PX Ophemert (NL)
(72) Inventor: VAN DEE, Roeland Cornelis, 4061 PX Ophemert (NL)
(74) Representative: V.O.

(57) **Abstract**

Disclosed is a mobile concrete plant (100) for producing concrete, comprising a conveyor (50) for conveying at least a first and a second concrete ingredient. The conveyor (50) comprises a first receiving section (12) for receiving the first concrete ingredient and a second receiving section (22) for receiving the second concrete ingredient at a distance from the first receiving section (12). The conveyor (50) comprises a first weighing section (13) provided with a first weight sensor (14) for measuring a weight of the first concrete ingredient conveyed by the conveyor (50) through the first weighing section (13), and a second weighing section (23) provided with a second weight sensor (24) for measuring a weight of the second concrete ingredient conveyed by the conveyor (50) through the second weighing section (23).

## Description

### FIELD

The invention relates to a mobile concrete plant for producing concrete from starting concrete ingredients onsite.

### BACKGROUND

Concrete is a frequently used building material. It is composed of various concrete ingredients that typically include a course aggregate and a fine aggregate that are bonded together by a binder agent, such as a cement, that cures over time when mixed with water. Various concrete compositions are available, determined by the composition and mix ratios of the concrete ingredients.

The production of concrete can be done by central concrete plants, where the concrete ingredients are mixed in a desired composition. After the mixing of the concrete ingredients, the substantially fluid concrete is batchwise transported to a construction site where the concrete can harden. This type of operation is very time-sensitive, as the curing process of the concrete is irreversible and starts once the ingredients are mixed. This accordingly puts limits to maximum batch sizes for transportation as well as maximum distance of a location of the construction site relative to the central concrete plant.

Alternatively, mobile concrete plants, which are arranged to be transported, can produce concrete at any desired location by mixing the separated concrete ingredients onsite. Conventional mobile concrete plants typically include individual ingredient containers from where each of the concrete ingredients are separately supplied to a mixer. A composition of the concrete that is produced, is controlled by measuring a weight loss of each of the ingredient containers during release of concrete ingredients therefrom. The conventional mobile concrete plants have as a drawback that the total amount of concrete that can be produced is limited to the capacity of the concrete ingredients containers that can be transported by the mobile plant, as particularly replenishing the ingredient containers with concrete ingredient during a production process is not possible because of the required calibrated weight measurements of the ingredient containers.

### SUMMARY

It is an aim to provide a mobile concrete plant for producing concrete onsite, wherein a composition of the produced concrete can be accurately monitored and controlled.

According to an aspect herein a mobile concrete plant for producing concrete is provided, comprising a conveyor for conveying at least a first and a second concrete ingredient, wherein the conveyor comprises a first receiving section for receiving the first concrete ingredient and a second receiving section for receiving the second concrete ingredient at a distance from the first receiving section, and wherein the conveyor comprises a first weighing section provided with a first weight sensor for measuring a weight of the first concrete ingredient conveyed by the conveyor through the first weighing section, and a second weighing section provided with a second weight sensor for measuring a weight of the second concrete ingredient conveyed by the conveyor through the second weighing section. Hence, the respective weights of the first and concrete ingredients can be accurately determined, allowing accurate monitoring and control of the mix ratio of the produced concrete. Furthermore, with the weights of the first and the second concrete ingredient being measured at the conveyor, endless supply of the concrete ingredients to the conveyor is enabled. For example, respective containers from which the first and second concrete ingredients are fed to the conveyor can be endlessly replenished, during the concrete production, i.e. without having to interrupt the concrete production. The mobile concrete plant can particularly be arranged for continuously producing concrete, i.e. in a continuous flow process.

The conveyor may include an conveyor belt. In an exemplary embodiment, the conveyor includes two parallel conveyor belts; a first conveyor belt having the first receiving section and the first weighing section, and a second conveyor belt having the second receiving section and the second weighing section. The conveyor may alternatively include a single conveyor belt.

Optionally, with respect to a conveyance direction of the conveyor, the first weighing section is located downstream of the first receiving section and the second weighing section is located downstream of the second receiving section. Hence, a weight of concrete ingredient is measured after being received at the receiving section, allowing the concrete ingredient to settle after being fed to the conveyor. This improves the accuracy of the weight measurements. The first receiving section and the first weighing section may be spaced apart for providing a first settling section that allows settling of the received first concrete ingredient between the first receiving section and the first weighing section. Similarly, the second receiving section and the second weighing section may be spaced apart for providing a second settling section that allows settling of the received second concrete ingredient between the second receiving section and the second weighing section.

Optionally, the first weighing section and the first receiving section are spaced apart from each other in the conveyance direction by a distance of at least 1 meter, preferably at least 1.3 meter, more preferably at least 1.5 meter. Optionally, the second weighing section and the second receiving section are spaced apart from each other in the conveyance direction by a distance of at least 1 meter, preferably at least 1.3 meter, more preferably at least 1.5 meter. This ensures sufficient settlement of the concrete ingredients on the conveyor after being fed, while maintaining a compact setup.

Optionally, the mobile concrete plant comprises a single endless conveyor for conveying the first and the second concrete ingredient, wherein with respect to a conveyance direction of the single endless conveyor, the first receiving section and the first weighing section are located upstream of the second receiving section and the second weighing section. The mobile concrete plant may for example comprise only one endless conveyor, e.g. only one conveyor belt. A weight of the first concrete ingredient being deposited on the single conveyor can be measured with the first weight sensor at the first weighing section. The first concrete ingredient weight can be determined independent of the second concrete ingredient, since the second concrete ingredient can be deposited on the single conveyor downstream of the first weighing section. At the second weighing section, a weight of the second concrete ingredient can be measured in addition to a weight of the first concrete ingredient, being both conveyed through the second weighing section of the single conveyor. A weight of the second concrete ingredient being conveyed through the second weighing section can be determined, for example, by subtracting the measured weight of the first concrete ingredient being conveyed through the first weighing section from the measured weight of concrete ingredient being conveyed through the second weighing section.

Optionally, the mobile concrete plant comprises a processing unit configured for receiving a first sensor signal from the first weight sensor indicative of a weight of the first concrete ingredient being conveyed through the first weighing section, and for receiving a second sensor signal from the second weight sensor indicative of a combined weight of the first and the second concrete ingredient being conveyed through the second weighing section. The processing unit may for instance be part of a controller, such as a programmable logic controller (PLC), having one or more input ports for receiving the first and the second sensor signal. The PLC may also include an output for sending command signals to actuator devices of the mobile plant, such as outfeed devices for supplying the first and the second concrete ingredient to the conveyor.

Optionally, the processing unit is configured to determine, based on at least the first sensor signal, a weight of the first concrete ingredient being conveyed through the first weighing section, and to determine, based on at least the second sensor signal, a combined weight of the first and the second concrete ingredient being conveyed through the second weighing section, wherein the processing unit is configured to determine a weight of the second concrete ingredient by subtracting said determined weight of the first ingredient from said determined combined weight.

Optionally, the processing unit is configured to determine, based on at least the first sensor signal, a weight of the first concrete ingredient being conveyed through the first weighing section at a first time instant, and to determine, based on at least the second sensor signal, a combined weight of the first and the second concrete ingredient being conveyed through the second weighing section at a second time instant, the first time instant and the second time instant being separated from each other by a time interval that corresponds to a time duration of conveyance of the first concrete ingredient from the first weighing section to the second weighing section.

Optionally, the mobile concrete plant comprises a first container for holding the first concrete ingredient and a second container for holding the second concrete ingredient, the first and the second container having a respective outfeed device arranged for discharging respectively the first concrete ingredient from the first container onto the first receiving section of the conveyor and the second concrete ingredient from the second container onto the second receiving section of the conveyor.

Optionally, the first and the second container are arranged next to one another above the conveyor in the conveyance direction of the conveyor. Hence, a compact setup can be obtained.

Optionally, with respect to the conveyance direction of the conveyor, the first receiving section of the conveyor is located at an upstream side of the first container, and/or wherein the second receiving section of the conveyor is located at an upstream side of the second container. Hence, a compact setup can be obtained, particularly in view of providing a settling section of the conveyor between a receiving section and a weighing section that allows the received concrete ingredient to settle before being measured.

Optionally, the processing unit is configured for controlling an outfeed speed of first concrete ingredient from the first container using the first container outfeed device and/or wherein the processing unit is configured for controlling an outfeed speed of second concrete ingredient from the second container using the second container outfeed device.

Optionally, the first concrete ingredient is a fine aggregate, and wherein the second concrete ingredient is course aggregate.

Optionally, the mobile concrete plant comprises a third receiving section for receiving a third concrete ingredient, wherein the conveyor comprises a third weighing section provided with a third weight sensor for measuring a weight of the third concrete ingredient conveyed by the conveyor through the third weighing section.

Optionally, the third concrete ingredient is binding agent.

According to a further aspect is provided a method for producing concrete using a mobile concrete plant. The method comprises providing a conveyor; receiving a first concrete ingredient on a first receiving section of the conveyor; conveying the received first concrete ingredient through a first weighing section of the conveyor; and determining, using a first weight sensor provided at the first weigh section, a weight of the first concrete ingredient being conveyed through the first weighing section; and receiving a second concrete ingredient on a second receiving section of the conveyor, separate from the first receiving section; conveying the second concrete ingredient through a second weighing section; and determining, using a second weight sensor provided at the second weighing section, a weight of the second concrete ingredient being conveyed through the second weighing section.

Optionally, the method comprises receiving at a processing unit a first sensor signal from the first weight sensor indicative of a weight of the first concrete ingredient being conveyed through the first weighing section; and receiving a second sensor signal from the second weight sensor indicative of a combined weight of the first and the second concrete ingredient being conveyed through the second weighing section.

Optionally, the method comprises determining, based on at least the first sensor signal, a weight of the first concrete ingredient being conveyed through the first weighing section; and determining, based on at least the second sensor signal, a combined weight of the first and the second concrete ingredient being conveyed through the second weighing section, wherein the weight of the second concrete ingredient is determined by subtracting said determined weight of the first ingredient from said determined combined weight.

Optionally the method comprises determining, based on at least the first sensor signal, a weight of the first concrete ingredient being conveyed through the first weighing section at a first time instant; and determining, based on at least the second sensor signal, a combined weight of the first and the second concrete ingredient being conveyed through the second weighing section at a second time instant, the first time instant and the second time instant being separated from each other by a time interval that corresponds to a time duration of conveyance of the first concrete ingredient from the first weighing section to the second weighing section.

According to a further aspect is provided a vehicle, comprising a concrete plant for producing concrete, the concrete plant comprising a conveyor for conveying at least a first and a second concrete ingredient, wherein the conveyor comprises a first receiving section for receiving the first concrete ingredient and a second receiving section for receiving the second concrete ingredient, and wherein the conveyor comprises a first weighing section provided with a first weight sensor for measuring a weight of the first concrete ingredient conveyed by the conveyor through the first weighing section, and a second weighing section provided with a second weight sensor for measuring a weight of the second concrete ingredient conveyed by the conveyor through the second weighing section.

It will be appreciated that any one or more of the above aspects, features and options can be combined. It will be appreciated that any one of the options described in view of one of the aspects can be applied equally to any of the other aspects.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

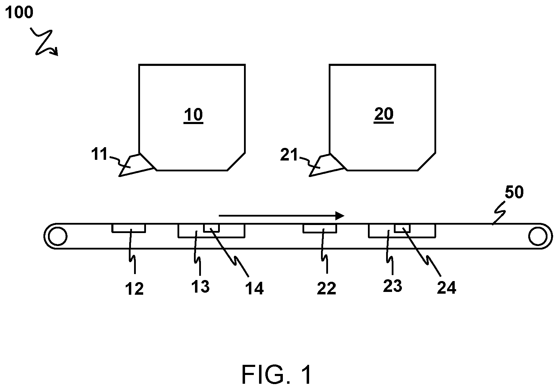

In the drawing: Fig. 1 shows a schematic example of a mobile concrete plant.

### DETAILED DESCRIPTION

Figure 1 shows a schematic example of a mobile concrete plant 100. The plant 100 comprises a conveyor 50, particularly a single endless conveyor belt. Above the conveyor 50, two concrete ingredient containers are arranged, namely a first container 10 for holding a first concrete ingredient, and a second ingredient container 20 for holding a second concrete ingredient. The first 10 and the second container 20 may include a replenish opening, e.g. arranged at a top side of the containers, to facilitate replenishing of the containers. The first concrete ingredient may for example be a fine aggregate such as sand, and the second concrete ingredient may be a course aggregate such as course gravel, pebbles, or crushed rocks.

The conveyor 50 is arranged to convey the first concrete ingredient and the second concrete ingredient in a conveyance direction, which conveyance direction indicated by the arrow in figure 1. The first and second concrete ingredients may for example be conveyed to a mixer, e.g. a screw conveyor, in which the first and the second concrete ingredients are mixed, e.g. in addition to other concrete ingredients such as cement and water.

The first container 10 and the second container 20 are, in this example, arranged above the conveyor 50, and furthermore next to each other in a conveyance direction of the conveyor. Each container 10, 20 includes a respective outfeed device 11, 21. The outfeed devices 11, 21 are arranged to discharge concrete ingredient from the respective containers 10, 20 onto the conveyor 50. Each outfeed device may for example include an outfeed conveyor belt. An outfeed speed of each outfeed device 11, 12 may be controllable, e.g. using a control unit of the plant, so as to control a mass flow of the first and second concrete ingredient being discharged from their respective containers 10, 20 onto the conveyor 50. The conveyor 50 comprises a first receiving section 12 for receiving the first concrete ingredient, and a second receiving section 22 for receiving the second concrete ingredient. The first and second receiving sections 12, 22, may for instance be reinforced to withstand an impact of the discharged concrete ingredients from their respective containers.

The first receiving section 12 is spaced apart from the second receiving section 22, in the conveyance direction. Here, the second receiving section 22 is located downstream of the first receiving section. Hence, in this example, the second concrete ingredient is discharged on top of the first concrete ingredient at the second receiving section 23 of the conveyor 50. Between the first receiving section 12 and the second receiving section 22, a first weighing section 13 is arranged, which first weighing section 13 is provided with a first weight sensor 14, e.g. a first load cell, for measuring a weight of the first concrete ingredient being conveyed through the first weighing section 13. Downstream of the first weighing section 13, the second concrete ingredient is received by the conveyor 50 at the second receiving section 22. Downstream of the second receiving section 22, a second weighing section 23 is arranged, which second weighing section 23 is provided with a second weight sensor 24, e.g. a second load cell, for measuring a weight of the second concrete ingredient being conveyed through the second weighing section 23. Here, the second weight sensor 24 is arranged to measure a combined weight of the first concrete ingredient and the second concrete ingredient being conveyed through the second weighing section 23. A weight of the second concrete ingredient can be determined by subtracting from the measured combined weight, the measured weight of the first concrete ingredient being transported through the first weighing section 13. For particular accurate determinization of the weight of the second concrete ingredient, there may be accounted for a time period of conveyance of the first concrete ingredient from the first weighing section 13 to the second weighing section 23. Measurement data of the first and/or the second weight sensor 14, 24 may for example be stored as a time series in a memory, e.g. of a control unit. A processing device, e.g. of the control unit, may be configured to determine the respective weights of the first and the second concrete ingredients, being conveyed by the conveyor 50. Based on the weights of the first and second concrete ingredient, a mix ratio can be determined between the first and the second concrete ingredient.

The plant 100 may be transportable, e.g. using a truck. The plant 100 may for example be integrated with a vehicle. The plant 100 may also be detachable from a vehicle, e.g. for deploying the plant 100 on site.

Herein, the invention is described with reference to specific examples of embodiments of the invention. It will, however, be evident that various modifications and changes may be made therein, without departing from the essence of the invention. For the purpose of clarity and a concise description features are described herein as part of the same or separate embodiments, however, alternative embodiments having combinations of all or some of the features described in these separate embodiments are also envisaged.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Mobile concrete plant for producing concrete, comprising a conveyor for conveying at least a first and a second concrete ingredient, wherein the conveyor comprises a first receiving section for receiving the first concrete ingredient and a second receiving section at a distance from the first receiving section for receiving the second concrete ingredient, and wherein the conveyor comprises a first weighing section provided with a first weight sensor for measuring a weight of the first concrete ingredient conveyed by the conveyor through the first weighing section, and a second weighing section provided with a second weight sensor for measuring a weight of the second concrete ingredient conveyed by the conveyor through the second weighing section.

2. Mobile concrete plant of claim 1, wherein with respect to a conveyance direction of the conveyor, the first weighing section is located downstream of the first receiving section and the second weighing section is located downstream of the second receiving section.

3. Mobile concrete plant of claim 2, wherein the first weighing section and the first receiving section are spaced apart from each other in the conveyance direction by a distance of at least 1 meter, preferably at least 1.3 meter, more preferably at least 1.5 meter, and wherein the second weighing section and the second receiving section are spaced apart from each other in the conveyance direction by a distance of at least 1 meter, preferably at least 1.3 meter, more preferably at least 1.5 meter.

4. Mobile concrete plant of any preceding claim, comprising a single endless conveyor for conveying the first and the second concrete ingredient, wherein with respect to a conveyance direction of the single endless conveyor, the first receiving section and the first weighing section are located upstream of the second receiving section and the second weighing section.

5. Mobile concrete plant of claim 4, comprising a processing unit configured for receiving a first sensor signal from the first weight sensor indicative of a weight of the first concrete ingredient being conveyed through the first weighing section, and for receiving a second sensor signal from the second weight sensor indicative of a combined weight of the first and the second concrete ingredient being conveyed through the second weighing section.

6. Mobile concrete plant of claim 5, wherein the processing unit is configured to determine, based on at least the first sensor signal, a weight of the first concrete ingredient being conveyed through the first weighing section, and to determine, based on at least the second sensor signal, a combined weight of the first and the second concrete ingredient being conveyed through the second weighing section, wherein the processing unit is configured to determine a weight of the second concrete ingredient by subtracting said determined weight of the first ingredient from said determined combined weight.

7. Mobile concrete plant of claim 5, wherein the processing unit is configured to determine, based on at least the first sensor signal, a weight of the first concrete ingredient being conveyed through the first weighing section at a first time instant, and to determine, based on at least the second sensor signal, a combined weight of the first and the second concrete ingredient being conveyed through the second weighing section at a second time instant, the first time instant and the second time instant being separated from each other by a time interval that corresponds to a time duration of conveyance of the first concrete ingredient from the first weighing section to the second weighing section.

8. Mobile concrete plant of any preceding claim, comprising a first container for holding the first concrete ingredient and a second container for holding the second concrete ingredient, the first and the second container having a respective outfeed device arranged for discharging respectively the first concrete ingredient from the first container onto the first receiving section of the conveyor and the second concrete ingredient from the second container onto the second receiving section of the conveyor.

9. Mobile concrete plant of claim 8, wherein the first and the second container are arranged next to one another above the conveyor in the conveyance direction of the conveyor.

10. Mobile concrete plant of claim 9, wherein, with respect to the conveyance direction of the conveyor, the first receiving section of the conveyor is located at an upstream side of the first container, and/or wherein the second receiving section of the conveyor is located at an upstream side of the second container.

11. Mobile concrete plant of any of claims 5-7 and any of claims 8-10, wherein the processing unit is configured for controlling an outfeed speed of first concrete ingredient from the first container using the first container outfeed device and/or wherein the processing unit is configured for controlling an outfeed speed of second concrete ingredient from the second container using the second container outfeed device.

12. Mobile concrete plant of any preceding claim, wherein the first concrete ingredient is a fine aggregate, and wherein the second concrete ingredient is course aggregate.

13. Mobile concrete plant of any preceding claim, comprising a third receiving section for receiving a third concrete ingredient, wherein the conveyor comprises a third weighing section provided with a third weight sensor for measuring a weight of the third concrete ingredient conveyed by the conveyor through the third weighing section.

14. Mobile concrete plant of claim 13, wherein the third concrete ingredient is binding agent.

15. Method for producing concrete using a mobile concrete plant, the method comprising
providing a conveyor;
receiving a first concrete ingredient on a first receiving section of the conveyor; conveying the received first concrete ingredient through a first weighing section of the conveyor; and determining, using a first weight sensor provided at the first weigh section, a weight of the first concrete ingredient being conveyed through the first weighing section;
receiving a second concrete ingredient on a second receiving section of the conveyor, separate from the first receiving section; conveying the second concrete ingredient through a second weighing section; and determining, using a second weight sensor provided at the second weighing section, a weight of the second concrete ingredient being conveyed through the second weighing section.

16. Method of claim 15, comprising receiving at a processing unit a first sensor signal from the first weight sensor indicative of a weight of the first concrete ingredient being conveyed through the first weighing section; and receiving a second sensor signal from the second weight sensor indicative of a combined weight of the first and the second concrete ingredient being conveyed through the second weighing section.

17. Method of claim 16, comprising determining, based on at least the first sensor signal, a weight of the first concrete ingredient being conveyed through the first weighing section; and determining, based on at least the second sensor signal, a combined weight of the first and the second concrete ingredient being conveyed through the second weighing section, wherein the weight of the second concrete ingredient is determined by subtracting said determined weight of the first ingredient from said determined combined weight.

18. Method of claim 16, comprising determining, based on at least the first sensor signal, a weight of the first concrete ingredient being conveyed through the first weighing section at a first time instant; and determining, based on at least the second sensor signal, a combined weight of the first and the second concrete ingredient being conveyed through the second weighing section at a second time instant, the first time instant and the second time instant being separated from each other by a time interval that corresponds to a time duration of conveyance of the first concrete ingredient from the first weighing section to the second weighing section.
